# EUROPEAN PATENT APPLICATION

(11) **EP 4 734 621 A2**
(43) Date of publication of application: **29.04.2026**
(21) Application number: 26163166.7
(22) Date of filing: 07.02.2020
(51) Int. Cl.: H04W 56/00

(54) **TERMINAL AND COMMUNICATION METHOD**

(62) Divisional of application: 20917905.0
(71) Applicant: NTT DOCOMO, INC., Tokyo 100-6150 (JP)
(72) Inventor: HARADA, Hiroki, Tokyo, 100-6150 (JP); YOSHIOKA, Shohei, Tokyo, 100-6150 (JP); KUMAGAI, Shinya, Tokyo, 100-6150 (JP); KURITA, Daisuke, Tokyo, 100-6150 (JP); NAGATA, Satoshi, Tokyo, 100-6150 (JP); TAKADA, Takuma, Tokyo, 100-6150 (JP)
(74) Representative: Hoffmann Eitle

(57) **Abstract**

A terminal includes a receiving unit configured to receive downlink control information in a first carrier, and to receive, based on the downlink control information, data via a downlink shared channel in a second carrier, wherein a frame border timing difference between the first carrier and the second carrier, exceeds a predetermined time range, a transmitting unit configured to transmit, via an uplink control channel in the first carrier, HARQ (hybrid automatic repeat request) information corresponding to the downlink shared channel, and a control unit configured to control reception timing of the downlink shared channel and transmission timing of the uplink control channel.

## Description

### Technical Field

The present invention relates to a terminal and a communication method in a wireless communication system.

### Background Art

In NR (New Radio) (also referred to as "5G"), which is the successor system of LTE (Long Term Evolution), techniques for satisfying, as required conditions, large capacity system, high data transmission speed, low delay, and simultaneous connection of many terminals, low cost, power saving, and the like are being studied. (for example, Non-Patent Document 1). 5G is a mobile communication system that supports higher frequency band such as millimeter waves of more than 10 GHz. Ultra-highspeed wireless data communication in the class of several Gbps can be implemented by using a frequency bandwidth of several hundred MHz, which is significantly wider than conventional systems such as LTE.

However, scope for improvement is associated with millimeter-wave technology in mobile communication, and discussions of Beyond 5G and 6G as post-5G systems have begun (for example, Non-Patent Document 2). Expansion of new frequency bands is being discussed as a candidate considered for Beyond 5G and 6G. For example, the new frequency bands include a frequency band of 100 GHz or higher, a terahertz band, or the like.

### Prior Art Document

### Non-Patent Document

Non-Patent Document 1: 3GPP TS 38.300 V15.8.0 (2019-12)
Non-Patent Document 2: NTT DOCOMO, INC., DOCOMO 5G White Paper "5G Evolution and 6G" (2020-01)
Non-Patent Document 3: 3GPP TS 38.104 V15.8.0 (2019-12)
Non-Patent Document 4: 3GPP TS 38.133 V15.8.0 (2019-12)

### Summary of the Invention

### Problem to be Solved by the Invention

However, higher frequency bands are not necessarily suitable as carriers for maintaining a connection between a terminal and a network due to the tendency to travel in straight lines or high propagation loss of radio waves.

The present invention has been made in view of the above problem, and it is an object of the present invention to achieve a stable communication using multiple frequency bands in a wireless communication system.

### Means for Solving Problem

According to the disclosed technique, provided is a terminal including a receiving unit configured to receive downlink control information in a first carrier, and to receive, based on the downlink control information, data via a downlink shared channel in a second carrier, wherein a frame border timing difference between the first carrier and the second carrier, exceeds a predetermined time range, a transmitting unit configured to transmit, via an uplink control channel in the first carrier, HARQ (hybrid automatic repeat request) information corresponding to the downlink shared channel, and a control unit configured to control reception timing of the downlink shared channel and transmission timing of the uplink control channel.

### Effect of the Invention

According to the disclosed technique, stable communication can be achieved using multiple frequency bands in a wireless communication system.

### Brief Description of Drawings

FIG. 1 is a drawing illustrating a configuration example (1) according to the present invention wireless communication system;
FIG. 2 is a drawing illustrating a configuration example (2) according to the present invention wireless communication system;
FIG. 3 is a drawing illustrating an example of frequency bands according to the present invention;
FIG. 4 is a drawing for explaining TAE and MRTD;
FIG. 5 is a drawing for explaining CA in a case where base station antennas are not arranged at the same location;
FIG. 6 is a drawing for explaining CA in a case where base station antennas are arranged at the same location;
FIG. 7 is a sequence diagram illustrating an example of scheduling according to an embodiment of the present invention;
FIG. 8 is a drawing illustrating an example of synchronous CA;
FIG. 9 is a drawing illustrating an example of asynchronous CA according to an embodiment of the present invention;
FIG. 10 is a drawing illustrating an example of a functional configuration of a base station 10 according to an embodiment of the present invention;
FIG. 11 is a drawing illustrating an example of a functional configuration of a terminal 20 according to an embodiment of the present invention; and
FIG. 12 is a drawing illustrating an example of a hardware configuration of the base station 10 or the terminal 20 according to an embodiment of the present invention.

### Mode for Carrying Out the Invention

An embodiment of the present invention will be hereinafter described with reference to drawings. The embodiment described below is an example, and the embodiment to which the present invention is applied is not limited to the following embodiment.

In operation of a wireless communication system according to embodiments of the present invention, existing techniques are used as appropriate. However, an example of existing technique includes an existing LTE, but is not limited to the existing LTE. In addition, the term "LTE" used in this specification has a broad meaning including LTE-Advanced and specifications newer than LTE-Advanced (e.g., NR) unless otherwise specified.

In the embodiments of the present invention described below, terms such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), and the like used in the existing LTE are used. This is for convenience of description, and signals, functions, and the like may be referred to as other names. In NR, the above terms correspond to NR-SS, NR-PSS, NR-SSS, NR-PBCH, NR-PRACH, , NR-PDCCH, NR-PDSCH, NR-PUCCH, NR-PUSCH, and the like. However, even when signals are used for NR, "NR-" is not necesarily attached thereto.

In the embodiments of the present invention, the duplex method may be a TDD (Time Division Duplexing) system, an FDD (Frequency Division Duplexing) system, or others (for example, Flexible Duplexing and the like).

Further, in the embodiment of the present invention, "to configure" a radio parameter or the like may be that a predetermined value is configured in advance (Pre-configure), or that a radio parameter notified from a base station 10 or a terminal 20 is configured.

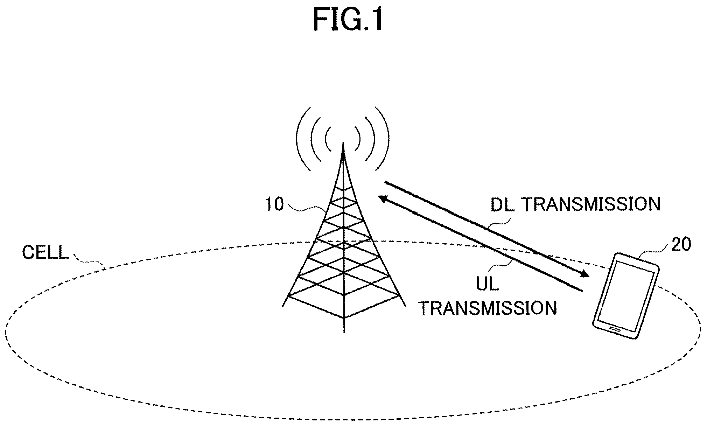

FIG. 1 is a drawing illustrating a configuration example (1) of a wireless communication system according to the embodiment of the present invention. As illustrated in FIG. 1, a base station 10 and a terminal 20 are included. In FIG. 1, one base station 10 and one terminal 20 are illustrated, but this is only an example. Alternatively, a plurality of base stations 10 and terminals 20 may be provided. The terminal 20 may also be referred to as "user equipment". The wireless communication system according to the present embodiment may be referred to as a NR-U system.

The base station 10 provides one or more cells, and is a communication apparatus wirelessly communicating with the terminal 20. The physical resource of a radio signal may be defined by the time domain and the frequency domain. The time domain may be defined by slots or an OFDM symbols. The frequency domain may be defined by sub-bands, subcarriers, or resource blocks.

As illustrated in FIG. 1, the base station 10 transmits control information or data to the terminal 20 through DL (Downlink), and receives control information or data from the terminal 20 through UL (Uplink). Both the base station 10 and the terminal 20 can transmit and receive signals by performing beamforming. Both the base station 10 and the terminal 20 can apply communication based on MIMO (Multiple Input Multiple Output) to DL or UL. Also, both the base station 10 and the terminal 20 may perform communication via a secondary cell (SCell) with CA (Carrier Aggregation) and a primary cell (PCell).

The terminal 20 is a communication apparatus equipped with a wireless communication function such as a smartphone, a mobile phone, a tablet, a wearable terminal, and a communication module for M2M (Machine-to-Machine). As illustrated in FIG. 1, the terminal 20 receives control information or data from the base station 10 in DL, and transmits control information or data to the base station 10 in UL, thereby using various communication services provided by the wireless communication system.

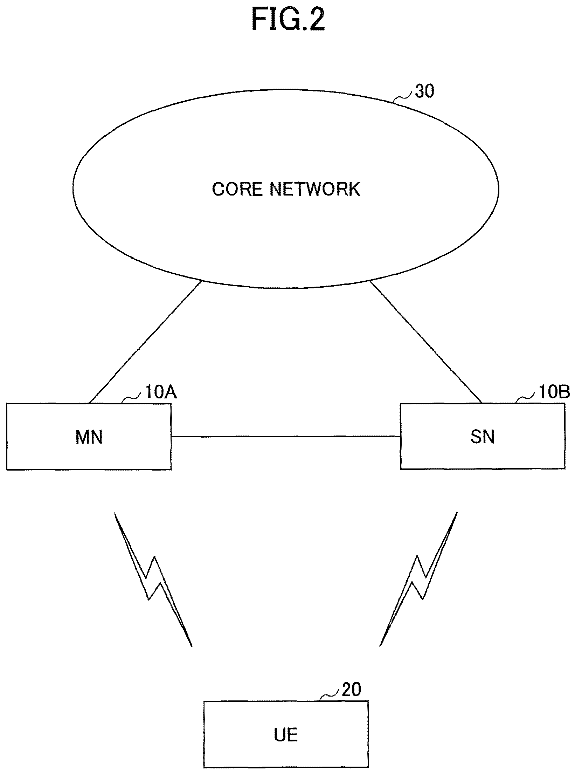

FIG. 2 is a drawing illustrating a configuration example (2) of a wireless communication system according to the embodiment of the present invention. FIG. 2 illustrates an example of configuration of the wireless communication system in a case where NR-DC (NR-Dual connectivity) is executed. As illustrated in FIG. 2, a base station 10A serving as a MN (Master Node) and a base station 10B serving as a SN (Secondary Node) are provided. The base station 10A and the base station 10B are connected to a core network 30. The terminal 20 communicates with both the base station 10A and the base station 10B.

A cell group provided by the base station 10A, i.e., the MN, is referred to as a MCG (Master Cell Group), and a cell group provided by the base station 10B, i.e., the SN, is referred to as a SCG (Secondary Cell Group). The following operation may be performed by any of the configurations of FIG. 1 and FIG. 2. The SCG may include a PSCell (Primary SCG Cell) and an SCell. The PCell may be a PCell of the MCG, or may be a PSCell of the SCG.

Discussions of Beyond 5G and 6G as post-5G systems have begun. Expansion of new frequency bands is being discussed as a candidate discussion item for Beyond 5G and 6G. For example, the new frequency bands include a frequency band of 100 GHz or higher, a terahertz band, or the like.

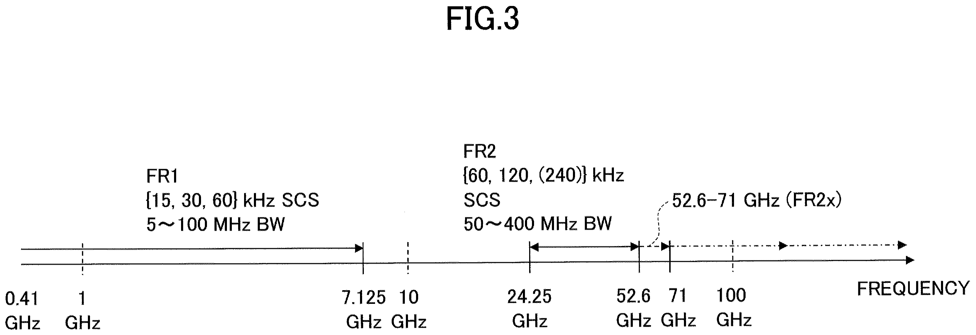

FIG. 3 is a drawing illustrating an example of frequency bands according to the present invention. As illustrated in FIG. 3, the FR1 is defined as a frequency band up to 7.125 GHz with subcarrier spacings {15, 30, 60} kHz and with a bandwidth of 5 to 100 MHz. As illustrated in FIG. 3, the FR2 is defined as a frequency band of 24.25 to 52.6 GHz with subcarrier spacings {60, 120, 240} kHz and with a bandwidth of 50 to 400 MHz. As illustrated in FIG. 3, a frequency band of 52.6 to 71 GHz may be referred to as "FR2x".

The frequency band of 52.6 to 71 GHz illustrated in FIG. 3 is considered to be supported in NR Release 17. In the NR Release 16, the frequency usage, use cases, and required specifications of 52.6 to 114.25 GHz in each country has been studied, and therefore, in NR Release 18 and later, support may be extended to around 114 GHz.

However, higher frequency band of, for example, 100 GHz or higher, may not be suitable as a carrier used to maintain a connection between a terminal and a network due to its high tendency to travel in a straight line or a high propagation loss of radio waves.

5G supports EN-DC (EUTRA-NR DC), NR (FR1)-NR(FR2) DC, FR1-FR2 CA, and the like, in which the FR2-NR is used in combination with LTE or FR1-NR.

In EN-DC or NR(FR1)-NR(FR2)DC, scheduling control, feedback, and the like are executed in a closed manner in a CG (Cell Group), and DCI or UCI is transmitted and received in the FR2. As the frequency bands become higher, detection errors of DCI or UCI are likely to occur.

In contrast, in the FR1-FR2 CA, control information (for example, scheduling DCI and/or feedback ) related to FR2 (SCell) can be transmitted and received in the FR1 (PCell). However, in the CA, a MRTD (Maximum receive timing difference) between carriers at a terminal assumed to perform inter-cell synchronization, a MTTD (Maximum transmission timing difference) between carriers at a terminal, and a TAE (Time alignment error) which is a transmission timing difference between carriers at a base station are specified, and a case where a timing difference becomes larger than a specified difference is not supported.

For example, even in a case where a lower frequency base station apparatus and a higher frequency base station apparatus are synchronized, antennas may be arranged at different positions. For example, the lower frequency antenna may be installed on a steel tower or an upper part of a building, whereas the higher frequency antenna may be installed in proximity to a terminal with optically connected remote radio equipment. In such an installation situation, a propagation delay difference occurs between a lower frequency signal and a higher frequency signal, and the reception timing difference at a terminal may become extremely large as compared with a slot or a symbol size of the higher frequency band in which the symbol length is short. In other words, unless the positions of the antenna are restricted to such an extent that the positions are greatly different from the actual use cases, the existing specifications related to the timing differences of the CA cannot be satisfied.

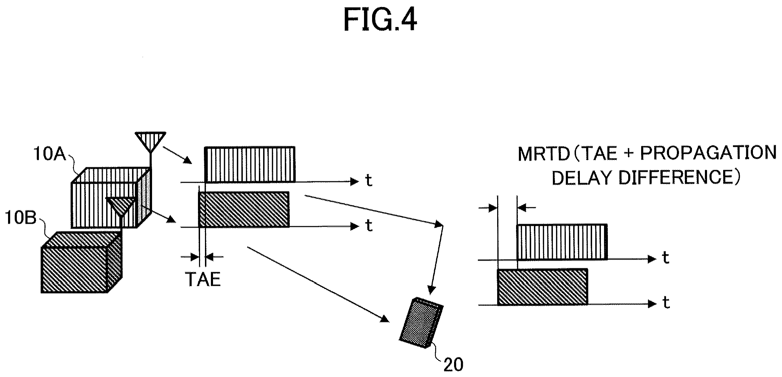

FIG. 4 is a drawing for explaining TAE and MRTD. As illustrated in FIG. 4, the TAE is a transmission timing difference of signals transmitted from the base station 10A and the base station 10B. A time obtained by further adding a propagation delay difference to the TAE is the maximum reception timing difference (MRTD). The base station 10A and the base station 10B may correspond to, for example, different antennas of the same base station in the case of CA, and may correspond to, for example, different base stations in the case of DC.

In the current NR specification, for example, the TAE in the FR1 is defined as the following a) to c) (for example, Non-Patent Document 3).
a) In a case of intra-band contiguous carrier aggregation, the TAE is not more than 260 nanoseconds.
b) In a case of intra-band non-contiguous carrier aggregation, the TAE is not more than 3 microseconds.
c) In a case of inter-band carrier aggregation, the TAE is not more than 3 microseconds.

In the current NR specification, for example, the TAE in the FR2 is defined as the following d) to f) (for example, Non-Patent Document 3).
d) In a case of intra-band contiguous carrier aggregation, the TAE is not more than 130 nanoseconds.
e) In a case of intra-band non-contiguous carrier aggregation, the TAE is not more than 260 nanoseconds.
f) In a case of inter-band carrier aggregation, the TAE is not more than 3 microseconds.

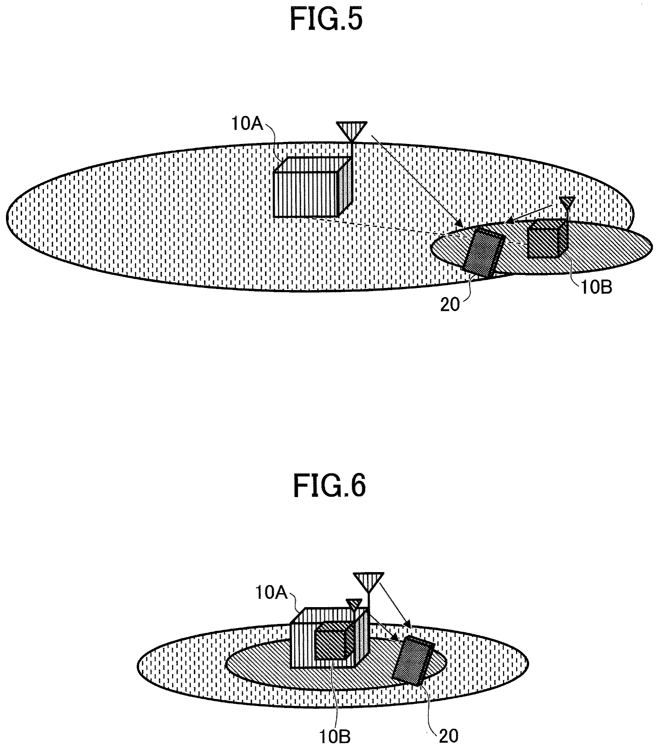

FIG. 5 is a drawing for explaining CA in the case where the base station antennas are not arranged at the same location. FIG. 5 is a CA in the case where the base station antennas are not arranged at the same location, and may also be referred to as Non-co-located CA. The base station 10A and the base station 10B correspond to different antennas of the same base station. As illustrated in FIG. 5, because the base station antennas are not arranged at the same location, a difference between (A) the distance between the antenna of the base station 10A and the terminal 20 and (B) the distance between the antenna of the base station 10B and the terminal 20 is relatively large, and therefore, the MRTD is required to be a large value.

FIG. 6 is a drawing for explaining CA in the case where the base station antennas are arranged at the same location. FIG. 6 is a CA in the case where the base station antennas are arranged at the same location, and may be referred to as a co-located CA. The base station 10A and the base station 10B correspond to different antennas of the same base station. As illustrated in FIG. 6, because the base station antennas are arranged at the same location, the difference between (A) the distance between the antenna of the base station 10A and the terminal 20 and (B) the distance between the antenna of the base station 10B and the terminal 20 is relatively smaller as compared with the case where the base station antennas are not arranged at the same location illustrated in FIG. 5, and therefore, the MRTD is not required to be a large value.

Table 1 is an example of request specification of MRTD in NR intra-band non-contiguous CA (for example, Non-Patent Document 4).

**[Table 1]**

| **Frequency Range** | **Maximum receive timing difference [*µ*s]** |
|---|---|
| FR1 | 3¹ |
| FR2 | 0.26 |
| Note 1: In the case of different SCS on different CCs, if the receive time difference exceeds the cyclic prefix length of that SCS, demodulation performance degradation is expected for the first symbol of the slot. | |

As illustrated in Table 1, in the FR1, 3 microseconds are required as the MRTD. As illustrated in Table 1, in the FR2, 0.26 microseconds are required as the MRTD. In the intra-band CA, depending on the required value of the MRTD, only the case where the base station antennas are arranged at the same location is supported.

Table 2 is an example of request specification of MRTD in NR inter-band CA (for example, Non-Patent Document 4).

**[Table 2 ]**

| **Frequency Range of the pair of carriers** | **Maximum receive timing difference [*µ*s]** |
|---|---|
| FR1 | 33 |
| FR2 | 8 |
| Between FR1 and FR2 | 25 |

As illustrated in Table 1, in the FR1, 33 microseconds are required as the MRTD. For example, similarly with the above c), the TAE of up to 3 microseconds is supported and accordingly, the propagation delay of up to 30 microseconds is supported. Therefore, a CA in which the antennas are not arranged at the same location with a propagation distance difference of up to 9 km is supported.

As illustrated in Table 2, in the FR2, 8 microseconds are required as the MRTD. As illustrated in Table 2, in the inter-band CA of the FR1 and the FR2, 25 microseconds are required as the

### MRTD.

Table 3 is an example of request specification of MTTD in NR inter-band CA (for example, Non-Patent Document 4).

**[Table 3 ]**

| **Frequency Range of the pair of TAGs** | **Maximum uplink transmission timing difference [*µ*s]** |
|---|---|
| FR1 | 34.6 |
| FR2 | 8.5 |
| Between FR1 and FR2 | 26.1 |

As illustrated in Table 3, in the FR1, 34.6 microseconds are required as the MTTD. As illustrated in Table 3, in the FR2, 8.5 microseconds are required as the MTTD. As illustrated in Table 3, in the inter-band CA of the FR1 and the FR2, 26.1 microseconds are required as the MTTD.

In this case, for example, in a case where a higher frequency band of 100 GHz or higher is used, similarly with the above NR inter-band CA of the FR1 and the FR2, CA between a higher frequency band and a lower frequency band is desired to be supported. Stable control can be achieved by transmitting and receiving DCI and/or UCI at a lower frequency.

However, in a case where a CA of a conventional technique based on inter-carrier synchronization is adopted, for example, the scenarios of installation of base stations may be limited, e.g., only co-located arrangement may be allowed.

Therefore, the asynchronous inter FR-CA is supported to achieve a stable control and a high throughput by using a higher frequency band together with a lower frequency band, and furthermore, use cases are expanded by alleviating the restrictions associated with the scenarios of installation of base stations. The inter FR-CA is a CA using a combination of different FR bands. In this case, "asynchronous" may be a case where the timing difference between frame borders of respective carriers at the terminal is larger than MRTDs for the FR1 and the FR2.

The asynchronous inter FR-CA may include a particular FR. For example, the particular FR may be an FR supporting the FR2x or higher frequency bands than the FR2x. The particular FR may be the FR1.

In the asynchronous inter FR-CA, a slot border of a carrier of an FR with a smaller subcarrier spacing may be at any position in a slot of a carrier of an FR with a larger subcarrier spacing. The terminal 20 may support a capability to perform reception from both the carrier of the FR with the smaller subcarrier spacing and the carrier of the FR with the larger subcarrier spacing even though the slot borders do not match. The smaller subcarrier spacing means that the subcarrier spacing is smaller than a subcarrier spacing of another carrier with which CA is performed. The larger subcarrier spacing means that the subcarrier spacing is larger than a subcarrier spacing of another carrier with which CA is performed. For example, the smaller subcarrier spacing may be 15 kHz, and the larger subcarrier spacing may be 240 kHz.

When the terminal 20 specifies or derives a slot or a symbol of the carrier with the larger subcarrier spacing with reference to the timing of the carrier with the smaller subcarrier spacing, the slot or the symbol is assumed to be a timing when the first slot or symbol where there is a border in the carrier with the larger subcarrier spacing is specified or derived after a timing derived equivalently with synchronous CA on the basis of the specified or specified value, i.e., a timing that matches a slot border of the carrier with the smaller subcarrier spacing.

The minimum value of a scheduling offset indicating timing related to scheduling is specified or configured to be a value larger than a value of the conventional synchronous CA. The scheduling offset is constituted by "K₀", "K₁", and "K₂". The details of the scheduling offset are explained later. "K₀" may be an offset, in units of slots, of a scheduled cell from a slot position where DCI is transmitted to a slot position where a PDSCH is transmitted. "K₁" may be an offset, in units of slots, of a scheduled cell from a slot position where a PDSCH is transmitted to a slot position of a PUCCH where a corresponding HARQ-ACK is transmitted. "K₂" may be an offset, in units of slots, of a scheduled cell from a slot position where DCI is transmitted to a slot position where a PUSCH is transmitted. The "HARQ-ACK" may also be referred to as "HARQ response", or may also be referred to as "HARQ information".

In the asynchronous inter FR-CA, a cell in which a PCell or a PUCCH is configured may not be limited to a predetermined FR. The predetermined FR may be, for example, an FR with a smaller subcarrier spacing, an FR with a larger subcarrier spacing, or FR1 or FR2x. The terminal 20 may report, to the network, UE capability information of asynchronous CA as UE capability information separately from a band combination. The UE capability information of asynchronous CA may be, for example, UE capability information indicating whether asynchronous CA is supported.

In an MR-DC/CA enhancement work item (WI) of Release 16, the restrictions on CA of Release 15, i.e., a radio frame border of 10 milliseconds is required to match between carriers in which CA is performed, have been alleviated, and a CA in which radio frame borders do not match, e.g., a notification of a slot offset between carriers based on the assumption that the slot borders do not match between carriers, is supported. However, as explained above, the slot borders are required to match between carriers, and the error thereof has not been changed from conventional MRTD, MTTD, and TAE, and therefore, the accuracy of the synchronous and the restrictions associated with installation of the base stations still need to be satisfied.

In the asynchronous inter FR-CA, a slot border of the carrier of the FR with the smaller subcarrier spacing may be at any position in a slot of the carrier of the FR with the larger subcarrier spacing, and the maximum value of the misalignment of the slot borders may be specified by the specification for each frequency band or for each combination of frequency bands. The terminal 20 may measure and report the misalignment of the slot borders on the basis of an instruction from the base station 10. The report granularity of the misalignment may be the number of symbols. The subcarrier spacing referred to by the symbol length may be specified by the specification or may be specified from the base station 10. The subcarrier spacing referred to by the symbol length may be, for example, the largest subcarrier spacing from among subcarrier spacings configured for each of PCell and SCell. Together with the misalignment of the slot borders, the terminal 20 may report, to the base station 10, the misalignment in radio frame borders with the granularity being the number of slots.

According to the misalignment of the slot borders, the terminal 20 may report the misalignment of the slot borders to the base station 10. For example, only in a case where the misalignment is more than a predetermined size, the terminal 20 may report the misalignment of the slot borders to the base station 10. In order to measure the misalignment of the slot borders, the terminal 20 may configure a time window on the basis of information received from the base station 10, or the terminal 20 may periodically measure the misalignment of the slot borders on the basis of information received from the base station 10.

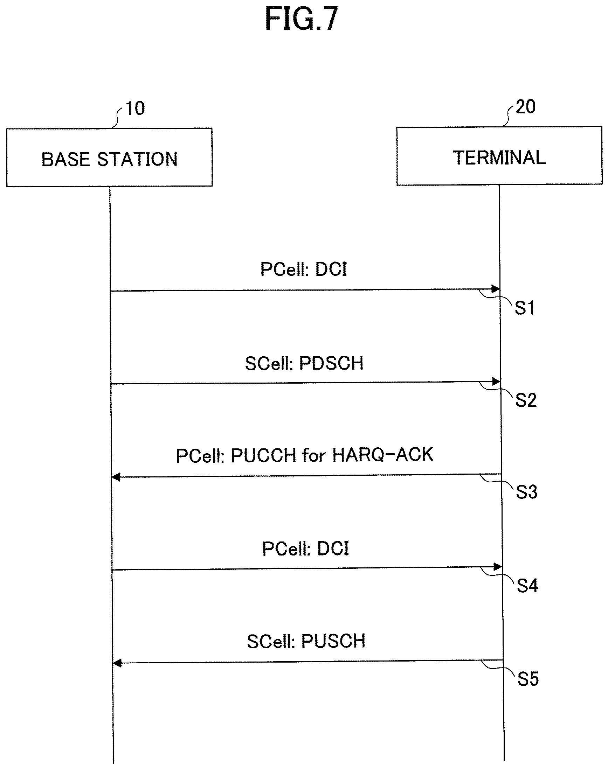

FIG. 7 is a sequence diagram illustrating an example of scheduling according to the present invention. An example of a sequence of cross carrier scheduling is explained with reference to FIG. 7.

In step S1, the base station 10 transmits, to the terminal 20, DCI for scheduling a PDSCH in a PCell. Subsequently, the base station 10 transmits data to the terminal 20 via the PDSCH corresponding to the scheduling of step S1 in a SCell (S2). In step S3, the terminal 20 transmits, via a PUCCH to the base station 10, a HARQ (hybrid automatic repeat request)-ACK corresponding to the PDSCH received in step S2 in the PCell.

In step S4, the base station 10 transmits DCI for scheduling the PUSCH to the terminal 20 in the PCell. Subsequently, the terminal 20 transmits the PUSCH corresponding to the scheduling of step S4 to the base station 10 in the SCell (S5).

In this case, in the asynchronous inter FR-CA, the PCell or the PUCCH cell may be configured by being limited to the carrier of the FR with the smaller subcarrier spacing. For example, in the particular frequency band, the PCell or the PUCCH cell does not have to be supported. The particular frequency band may be, for example, a higher frequency band equal to or more than the predetermined frequency. The terminal 20 may report to the network whether asynchronous CA is supported as UE capability information separately from a supported band combination, whether asynchronous CA is supported in association with the band combination, or, whether asynchronous CA is supported in association with a band.

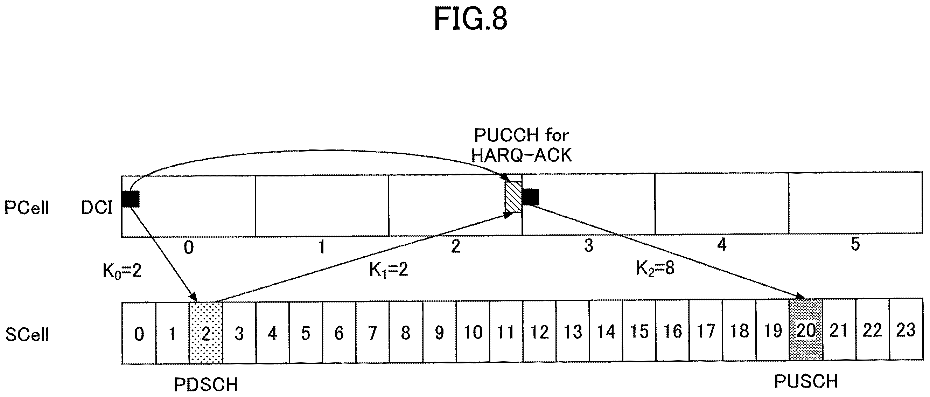

FIG. 8 is a drawing illustrating an example of synchronous CA. As illustrated in FIG. 8, a PDSCH of the SCell is scheduled by DCI transmitted by the base station 10 in the PCell. The scheduling offset K₀ is counted by the number of slots of the SCell, and in the example of FIG. 8, K₀ is 2. The terminal 20 receives the PDSCH of the SCell on the basis of the DCI received in the PCell.

Subsequently, the terminal 20 transmits, via the PUCCH of the PCell, a HARQ-ACK corresponding to the PDSCH received in the SCell. The scheduling offset K₁ is counted by the number of slots of the PCell, and in the example of FIG. 8, K₁ is 2

Subsequently, the PUSCH of the SCell is scheduled by DCI transmitted by the base station 10 in the PCell. The scheduling offset K₂ is counted by the number of slots of the SCell, and in the example of FIG. 8, K₂ is 8. The terminal 20 transmits the PUSCH of the SCell on the basis of the DCI received in the PCell.

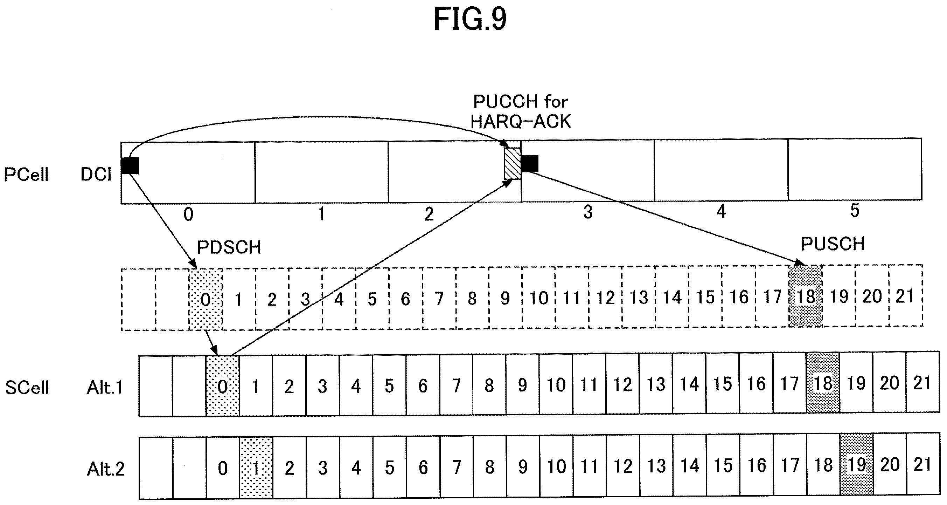

FIG. 9 is a drawing illustrating an example of asynchronous CA according to the present invention. Similarly with the SCell indicated by a broken line corresponding to the synchronous CA in FIG. 9, the PDSCH of the SCell is scheduled by DCI transmitted by the base station 10 in the PCell. The scheduling offset K₀ is counted by the number of slots of the SCell, and in the example of FIG. 9, K₀ is 2. The terminal 20 receives the PDSCH of the SCell on the basis of the DCI received in the PCell. In Alt.1 and Alt.2 as illustrated in FIG. 9, the timing difference between the frame border of the PCell and the frame border of the SCell is assumed to exceed the MRTD.

In this case, as indicated by Alt.1 of FIG. 9, a situation where a slot border of the SCell is delayed by about half of the slot length of the PCell because of the asynchronous CA, is assumed. The terminal 20 may assume that the first slot border after the timing of a slot border in the case of synchronous CA, is a timing where the PDSCH is arranged. In other words, the PDSCH may be arranged as indicated by Alt.1 of FIG. 9. The scheduling offset K₀ of Alt.1 is 2. In this case, as indicated in Alt.2, the scheduling offset may be increased by one to set the scheduling offset K₀ to 3.

With regard to the scheduling offsets other than K₀ of Alt.1 of FIG. 9, K₁ may be 2, and K₂ may be 8, so that the PUCCH may be transmitted in the slot #2 of the PCell, the DCI may be transmitted in the slot #3 of the PCell, and the PUSCH may be transmitted in the slot #18 of the SCell.

In the Alt.2 of FIG. 9, because the slot #1 of the SCell is present across the slot border of the PCell, the start point of the scheduling offset K₁ may be the slot #0 of the PCell, or may be the slot #1. When the slot #1 of the PCell is adopted as the start point of K₁, the PUCCH, in which the HARQ-ACK is transmitted, may be arranged in the slot #3 of the PCell. When the slot #0 of the PCell is adopted as the start point of K₁, the PUCCH, in which the HARQ-ACK is transmitted, may be arranged in the slot #2 of the PCell, and further, the scheduling offset K₂ may be increased by one to set the scheduling offset K₂ to 9. In the case of K₂=9, as illustrated in FIG. 9, the PUSCH is arranged in the slot #19 of the SCell.

During inter FR-DC, cross cell group scheduling and HARQ/CSI feedback may be supported. For example, scheduling of a PSCell (Primary secondary cell) or an SCell in the SCG (Secondary cell group) may be supported from the PCell or an SCell of the PCG (Primary cell group). For example, it may be supported to allow the terminal 20 to transmit, in the PCell or the SCell of the PCG, a feedback including a HARQ-ACK, CSI, or the like, related to the PSCell or the SCell of the SCG.

Both asynchronous inter FR-CA and inter FR-DC that perform cross cell group scheduling and HARQ/CSI feedback may be supported. The minimum value of the delay of scheduling, the minimum value of the delay of feedback, and an electric power control method, which are supported, may be different between the asynchronous inter FR-CA and the inter FR-DC, and each may be specified as UE capability information.

According to the above embodiment, the terminal 20 can achieve both stable control and high throughput by supporting asynchronous CA between a higher frequency band and a lower frequency band. The terminal 20 can achieve both stable control and a high throughput by supporting CA between an FR of a larger subcarrier spacing and an FR of a smaller subcarrier spacing. In addition, the terminal 20 can stably process timing differences due to misalignment of slot borders by increasing the scheduling offset.

In other words, in a wireless communication system, a stable communication can be achieved using multiple frequency bands in the wireless communication system.

### <Apparatus configuration>

Next, an example of functional configuration of the base station 10 and the terminal 20 that execute the processing and operations described so far will be described. The base station 10 and the terminal 20 include a function for implementing the above-described embodiment. However, each of the base station 10 and the terminal 20 may have only some of the functions in the embodiment.

### <Base station 10>

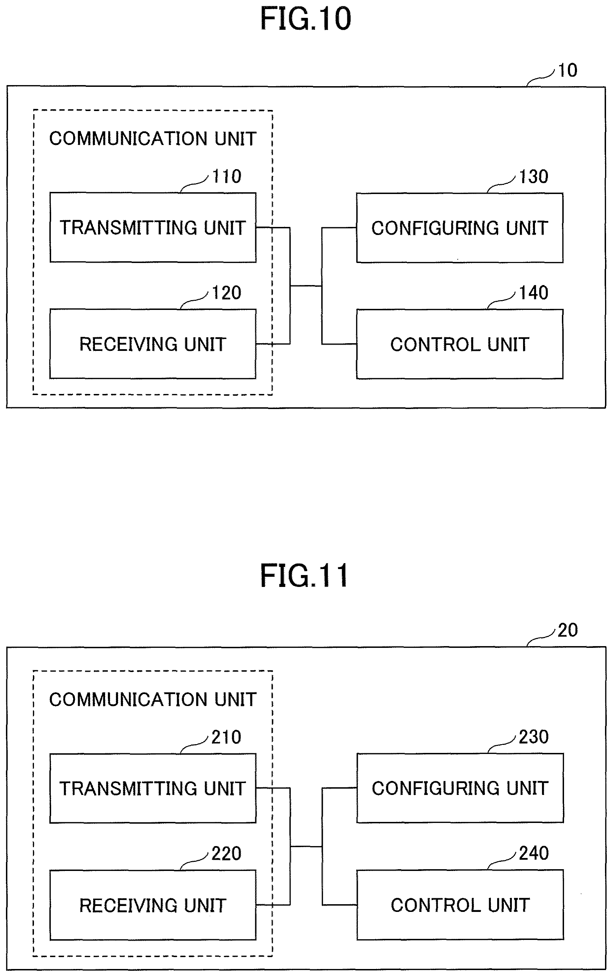

FIG. 10 is a drawing illustrating an example of a functional configuration of the base station 10. As illustrated in FIG. 10, the base station 10 includes a transmitting unit 110, a receiving unit 120, a configuring unit 130, and a control unit 140. The functional configuration illustrated in FIG. 10 is only an example. As long as the operation according to the embodiment of the present invention can be executed, the functions may be divided in any way, and the functional units may be given any names.

The transmitting unit 110 includes a function of generating signals to be transmitted to the terminal 20 and wirelessly transmitting the signals. Also, the transmitting unit 110 transmits an inter-network node message to another network node. The receiving unit 120 includes a function of wirelessly receiving various types of signals transmitted from the terminal 20 and acquiring, for example, information on a higher layer from the received signals. Further, the transmitting unit 110 has a function of transmitting NR-PSS, NR-SSS, NR-PBCH, a DL/UL control signal, a reference signal or the like to the terminal 20. Also, the receiving unit 120 receives an inter-network node message from another network node. The transmitting unit 110 and the receiving unit 120 may be combined into a communication unit.

The configuring unit 130 stores configuration information configured in advance and various configuration information to be transmitted to the terminal 20 in a storage device and reads out the configuration information from the storage device as needed. The contents of the configuration information include, for example, information used for cross carrier scheduling.

As described in the embodiment, the control unit 140 performs control of cross carrier scheduling. Also, the control unit 140 performs control of a HARQ response. A functional unit configured to transmit signals in the control unit 140 may be included in the transmitting unit 110, and a functional unit configured to receive signals in the control unit 140 may be included in the receiving unit 120.

### <Terminal 20>

FIG. 11 is a drawing illustrating an example of a functional configuration of the terminal 20 according to the embodiment of the present invention. As illustrated in FIG. 11, the terminal 20 includes a transmitting unit 210, a receiving unit 220, a configuring unit 230, and a control unit 240. The functional configuration illustrated in FIG. 11 is merely an example. As long as the operation according to the embodiment of the present invention can be executed, the functions may be divided in any way, and the function units may be given any names.

The transmitting unit 210 has a function of generating a transmission signal from transmission data and wirelessly transmitting the transmission signal. The receiving unit 220 wirelessly receives various types of signals, and acquires a signal in a higher-layer from the received signal in the physical layer. Also, the receiving unit 220 has a function of receiving NR-PSS, NR-SSS, NR-PBCH, DL/UL/SL control signals, reference signals, and the like that are transmitted from the base station 10. Also, for example, in D2D communication, the transmitting unit 210 transmits, to another terminal 20, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like. The receiving unit 220 receives the PSCCH, the PSSCH, the PSDCH, the PSBCH, and the like, from the another terminal 20. The transmitting unit 210 and the receiving unit 220 may be combined into a communication unit.

The configuring unit 230 stores various types of configuration information received from the base station 10 or a terminal 20 by the receiving unit 220 in a storage device and reads out the configuration information from the storage device as needed. The configuring unit 230 also stores configuration information configured in advance. The contents of the configuration information include, for example, information used for cross carrier scheduling.

As described in the embodiment, the control unit 240 performs control of cross carrier scheduling. The control unit 240 executes control of a HARQ response. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 10 and 11) used for explaining the above embodiments illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

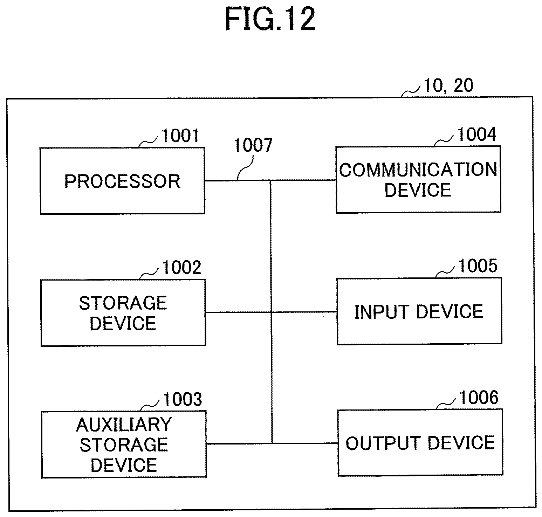

For example, the base station 10, the terminal 20, and the like according to one embodiment of the present disclosure may function as a computer that performs processing of a wireless communication according to the present disclosure. FIG. 12 is a drawing illustrating an example of a hardware configuration of the base station 10 or the terminal 20 according to an embodiment of the present disclosure. Each of the base station 10 and terminal 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station 10 and the terminal 20 may be configured to include one or more of the devices illustrated in drawings, or may be configured not to include some of the devices.

Each function of the base station 10 and the terminal 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station 10, as illustrated in FIG. 10, may be implemented by a control program that is stored in the storage device 1002 and that is executed by the processor 1001. Also, for example, the control unit 240 of the terminal 20, as illustrated in FIG. 11, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station 10 and the terminal 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to the embodiment of the present invention, provided is a terminal including a receiving unit configured to receive downlink control information in a first carrier, and to receive, based on the downlink control information, data via a downlink shared channel in a second carrier, wherein a frame border timing difference between the first carrier and the second carrier, exceeds a predetermined time range, a transmitting unit configured to transmit, via an uplink control channel in the first carrier, HARQ (hybrid automatic repeat request) information corresponding to the downlink shared channel, and a control unit configured to control a reception timing of the downlink shared channel and a transmission timing of the uplink control channel.

According to the above configuration, the terminal 20 can achieve both stable control and high throughput by supporting asynchronous CA between a higher frequency band and a lower frequency band. The terminal 20 can achieve both stable control and high throughput by supporting CA between an FR of a larger subcarrier spacing and an FR of a smaller subcarrier spacing. In addition, the terminal 20 can stably process a timing difference due to a misalignment of slot borders by increasing the scheduling offset. In other words, in a wireless communication system, stable communication can be achieved using multiple frequency bands in the wireless communication system.

As compared with the second carrier, the first carrier may be arranged in a lower frequency band, and may have a smaller subcarrier spacing. According to this configuration, the terminal 20 can achieve both stable control and high throughput by supporting asynchronous CA between a higher frequency band and a lower frequency band. The terminal 20 can achieve both stable control and high throughput by supporting CA between an FR of a larger subcarrier spacing and an FR of a smaller subcarrier spacing.

A slot border of the first carrier and a slot border of the second carrier do not have to match. According to this configuration, the terminal 20 can achieve both stable control and high throughput by supporting asynchronous CA between a higher frequency band and a lower frequency band. The terminal 20 can achieve both stable control and high throughput by supporting CA between an FR of a larger subcarrier spacing and an FR of a smaller subcarrier spacing.

The receiving unit may receive the downlink shared channel with reference to the slot border of the second carrier located immediately after the slot border of the first carrier. According to this configuration, the terminal 20 can stably process a timing difference due to a misalignment of slot borders.

The control unit may assume that an offset between the downlink control information and the downlink shared channel in a case where the first carrier and the second carrier are not synchronous is larger than an offset between the downlink control information and the downlink shared channel in a case where the first carrier and the second carrier are synchronous. According to this configuration, the terminal 20 can stably process a timing difference due to a misalignment of slot borders by increasing the scheduling offset.

According to the embodiment of the present invention, provided is a communication method for causing a terminal to execute receiving downlink control information in a first carrier, and receiving, based on the downlink control information, data via a downlink shared channel in a second carrier, wherein a frame border timing difference between the first carrier and the second carrier, exceeds a predetermined time range, transmitting, via an uplink control channel in the first carrier, HARQ (hybrid automatic repeat request) information corresponding to the downlink shared channel, and controlling a reception timing of the downlink shared channel and a transmission timing of the uplink control channel.

According to the above configuration, the terminal 20 can achieve both stable control and high throughput by supporting asynchronous CA between a higher frequency band and a lower frequency band. The terminal 20 can achieve both stable control and high throughput by supporting CA between an FR of a larger subcarrier spacing and an FR of a smaller subcarrier spacing. In addition, the terminal 20 can stably process a timing difference due to a misalignment of slot borders by increasing the scheduling offset. In other words, in a wireless communication system, a stable communication can be achieved using multiple frequency bands in the wireless communication system.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station 10 according to the embodiment of the present invention and software functioning with a processor of the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Thing) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of terminals 20 (that may be called D2D (Device-to-Device), V2X (Vehicle-to-Everything), or the like). In this case, a terminal 20 may have above-described functions of the base station 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive- or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each terminal 20 to assign, in TTI units, radio resources (such as frequency bandwidths, transmission power, and the like that can be used by each terminal 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other". Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, the DCI is an example of downlink control information. The MRTD is an example of a predetermined time range.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### Reference Signs List

- 10: base station
- 110: transmitting unit
- 120: receiving unit
- 130: configuring unit
- 140: control unit
- 20: terminal
- 210: transmitting unit
- 220: receiving unit
- 230: configuring unit
- 240: control unit
- 30: core network
- 1001: processor
- 1002: storage device
- 1003: auxiliary storage device
- 1004: communication apparatus
- 1005: input device
- 1006: output device
Further embodiments of the present invention are described as E1 to E6 as follows:
E1. A terminal comprising:
   a receiving unit configured to receive downlink control information in a first carrier, and to receive, based on the downlink control information, data via a downlink shared channel in a second carrier, wherein a frame border timing difference between the first carrier and the second carrier exceeds a predetermined time range;
   a transmitting unit configured to transmit, via an uplink control channel in the first carrier, HARQ (hybrid automatic repeat request) information corresponding to the downlink shared channel; and
   a control unit configured to control reception timing of the downlink shared channel and transmission timing of the uplink control channel.
E2. The terminal according to E1, wherein, as compared with the second carrier, the first carrier is arranged in a lower frequency band, and has a smaller subcarrier spacing.
E3. The terminal according to E2, wherein a slot border of the first carrier and a slot border of the second carrier do not match.
E4. The terminal according to E3, wherein the receiving unit receives the downlink shared channel with reference to the slot border of the second carrier located immediately after the slot border of the first carrier.
E5. The terminal according to E4, wherein the control unit assumes that an offset between the downlink control information and the downlink shared channel in a case where the first carrier is asynchronous with the second carrier , is larger than an offset between the downlink control information and the downlink shared channel in a case where the first carrier is synchronous with the second carrier.
E6. A communication method for causing a terminal to execute:
   receiving downlink control information in a first carrier, and receiving, based on the downlink control information, data via a downlink shared channel in a second carrier, wherein a frame border timing difference between the first carrier and the second carrier, exceeds a predetermined time range;
   transmitting, via an uplink control channel in the first carrier, HARQ (hybrid automatic repeat request) information corresponding to the downlink shared channel; and
   controlling reception timing of the downlink shared channel and transmission timing of the uplink control channel.

## Claims

1. A terminal comprising:
a receiving unit configured to receive downlink control information in a first carrier, and to receive, based on the downlink control information, data via a downlink shared channel in a second carrier;
a transmitting unit configured to transmit, via an uplink control channel in the first carrier, feedback information corresponding to the downlink shared channel; and
a control unit configured to control reception timing of the downlink shared channel and transmission timing of the uplink control channel.

2. The terminal according to claim 1, wherein, as compared with the second carrier, the first carrier is arranged in a lower frequency band, and has a smaller subcarrier spacing.

3. The terminal according to claim 2, wherein a slot border of the first carrier and a slot border of the second carrier do not match.

4. The terminal according to claim 3, wherein the receiving unit receives the downlink shared channel with reference to the slot border of the second carrier located immediately after the slot border of the first carrier.

5. The terminal according to claim 4, wherein an offset between the downlink control information and the downlink shared channel in a case where the first carrier is asynchronous with the second carrier, is larger than an offset between the downlink control information and the downlink shared channel in a case where the first carrier is synchronous with the second carrier.

6. A communication method executed by a terminal, the method comprising:
receiving downlink control information in a first carrier, and receiving, based on the downlink control information, data via a downlink shared channel in a second carrier;
transmitting, via an uplink control channel in the first carrier, feedback information corresponding to the downlink shared channel; and
controlling reception timing of the downlink shared channel and transmission timing of the uplink control channel.
